# EUROPÄISCHE PATENTSCHRIFT

(11) **EP 3 765 758 B1**
(45) Veröffentlichungstag und Bekanntmachung des Hinweises auf die Patenterteilung: **04.05.2022**
(21) Anmeldenummer: 19709672.0
(22) Anmeldetag: 05.03.2019
(51) Int. Cl.: F16C 35/077, F16H 55/22

(54) **SCHNECKENGETRIEBE MIT EINEM SCHWENKLAGER MIT DEFINIERTER SCHWENKACHSE**
HELICAL GEAR TRANSMISSION COMPRISING A PIVOT BEARING WITH A DEFINED PIVOT AXIS
ENGRENAGE À VIS SANS FIN COMPRENANT UN PALIER PIVOTANT COMPRENANT UN AXE DE PIVOTEMENT DÉFINI

(30) Priorität: 15.03.2018 DE 102018106026
(43) Veröffentlichungstag der Anmeldung: 20.01.2021
(73) Patentinhaber: thyssenkrupp Presta AG, 9492 Eschen (LI); thyssenkrupp AG, 45143 Essen (DE)
(72) Erfinder: BRAUN, Johannes, 6850 Dornbirn (AT); ILHAN, Deniz, 9326 Horn (CH); STUDER, Hans-Peter, 6719 Bludesch (AT)
(74) Vertreter: thyssenkrupp Intellectual Property GmbH
(86) Internationale Anmeldenummer: PCT/EP2019/055366
(87) Internationale Veröffentlichungsnummer: WO 2019/174961

(56) Entgegenhaltungen:
- DE-A1-102008 054 441
- DE-A1-102009 002 940
- DE-A1-102009 018 674
- DE-U1-202016 103 799

## Beschreibung

Die vorliegende Erfindung betrifft ein Schraubradgetriebe für eine elektromechanische Servolenkung mit den Merkmalen des Oberbegriffs des Anspruchs 1 sowie eine elektromechanische Servolenkung mit den Merkmalen des Oberbegriffs des Anspruchs 15.

In elektromechanischen Servolenkungen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle oder direkt auf einem Lenkritzel angeordneten Schneckenrad kämmt, wobei die Schneckenwelle in einem Getriebegehäuse drehbar gelagert ist. Die Schneckenwelle ist dabei mit der Motorwelle des elektrischen Servomotors über eine Kupplung verbunden.

Ein herkömmliches Schneckengetriebe hat am antriebsseitigen Ende ein Festlager und am freien Ende ein Loslager. Fertigungsbedingte oder montagebedingte Ungenauigkeiten, Abnutzungseffekte, Verschmutzung und dergleichen führen einzeln oder in Kombination dazu, dass der Eingriff zwischen Schneckenwelle und Schneckenrad zu locker und/oder zu eng ist. Ein zu enger Eingriff führt zu einer erhöhten Reibung, sodass das Getriebe schwergängig wird und die Abnutzung verstärkt wird. Es ist daher Ziel einen optimalen Eingriff zwischen Schneckenwelle und Schneckenrad zu ermöglichen, so dass das Schneckengetriebe geräuscharm ohne Klappern und Klopfen in Kombination mit geringer Reibung läuft.

Im Stand der Technik ist es bekannt, die Schneckenwelle an einem antriebsseitigen Ende über ein erstes Wälzlager zu lagern, das eine gewisse Kippbewegung oder Schwenkbewegung quer zur axialen Richtung erlaubt, während am gegenüberliegenden Ende die Schneckenwelle in einem zweiten Wälzlager drehbar gelagert ist, das mit einem Getriebegehäuse oder dergleichen über ein Federelement verbunden ist, die es in Richtung auf das Schneckenrad beaufschlagt. Damit kann die Schneckenwelle je nach Bedarf um das erste Wälzlager schwenken, um einen etwa gleichbleibenden Eingriff mit dem Schneckenrad zu gewährleisten.

Die Offenlegungsschrift DE 10 2013 003 749 A1 offenbart eine Lageranordnung für ein Getriebe einer Servolenkung. Die Schneckenwelle ist am motorseitigen Ende über eine Lageranordnung und am gegenüberliegenden Ende durch ein loses Kugellager gelagert. Das lose Kugellager ist dabei durch ein Federelement derart kraftbeaufschlagt, dass die Schneckenwelle gegen das Schneckenrad vorgespannt ist. Das Festlager umfasst ein Kugellager, welches in radialer Richtung von einem Mantelelement umgeben ist, welches eine gewisse radiale Verformbarkeit aufweist und radial innen-oder außenseitig ein konvexes Profil im Querschnitt hat. Über dieses Mantelelement sowie optional über ein zwischengeordnetes elastisches Element stützt sich das Kugellager am Getriebegehäuse ab, wodurch die Schneckenwelle zusammen mit dem Kugellager um eine Schwenkachse, die das Festlager mittig durchsetzt, gekippt werden kann. Zur axialen Lagerbefestigung sind auf beiden Seiten des Festlagers Axialfederelemente, bestehend aus zwischen zwei Ringen angeordneten Elastomeren, vorgesehen. DE 10 2008 054441 offenbart den Oberbegriff des Anspruchs 1.

Es ist eine Aufgabe der vorliegenden Erfindung ein Schraubradgetriebe bereitzustellen, welches eine Lageranordnung aufweist, die bei reduziertem Bauraumbedarf einen verbesserten Eingriff zwischen Schneckenwelle und Schneckenrad mit Geräuschreduktion herstellt.

Diese Aufgabe wird von einem Schraubradgetriebe für eine elektromechanische Servolenkung mit den Merkmalen des Anspruchs 1 und einer elektromechanische Servolenkung mit den Merkmalen des Anspruchs 15 gelöst. Vorteilhafte Weiterbildungen ergeben sich aus den Unteransprüchen. Demnach ist ein Schraubradgetriebe für eine elektromechanische Servolenkung umfassend eine mit einem Schraubrad kämmende Welle, wobei die Welle in einem Getriebegehäuse angeordnet ist und an ihrem ersten Ende in einer ersten Lageranordnung um eine Drehachse drehbar gelagert ist und an ihrem zweiten Ende in einer zweiten Lageranordnung in dem Getriebegehäuse gelagert ist, vorgesehen, wobei die erste Lageranordnung ein Wälzlager aufweist, dessen Außenring ballig ausgeformt ist, und wobei das Wälzlager von zwei Lagerschalen umschlossen ist, wobei der Außenring des Wälzlagers auf der Außenseite zwei in Umfangsrichtung gegenüberliegende Flachstellen aufweist, die eine Schwenkachse ausbilden, um die die Welle in Richtung des Schraubrades schwenkbar ist. Bevorzugt sind die Flachstellen kreisförmig ausgebildet. Weiter bevorzugt ist der Kreisdurchmesser der Flachstellen kleiner als die Breite des Außenringes. Bevorzugt ist die erste Lageranordnung die antriebsseitige Lageranordnung und die zweite Lageranordnung die antriebsferne Lageranordnung.

Die erfindungsgemäße Lageranordnung weist durch eine einfache Modifikation des Lageraußenringes ein Schwenklager auf, mit dem der Eingriff des Schraubradgetriebes bauraumsparend verbessert werden kann.

Vorzugsweise weisen die Lagerschalen auf einer Innenseite zwei in Umfangsrichtung gegenüberliegende ebene Flächen auf, die in Anlage mit den Flachstellen des Außenringes zur Definition der Schwenkachse steht. Bevorzugt sind die ebenen Flächen viereckförmig oder rechteckförmig ausgebildet. Besonders bevorzugt ist die Länge der ebenen Flächen bezogen auf die Umfangsrichtung der Lagerschalen gleich oder grösser als der Durchmesser der Flachstellen des Aussenrings.

Es ist weiterhin bevorzugt, wenn der Außenring des Wälzlagers in zwei weiteren begrenzten Anlageflächen in Anlage mit der Innenseite der Lagerschalen steht. Die Anlageflächen sind bevorzugt in Umfangsrichtung einander gegenüberliegend angeordnet. Es ist weiterhin denkbar und möglich, dass am Innenumfang der Lagerschalen beidseitig zwischen den ebenen Flächen in regelmässigen Abständen mehrere Anlageflächen vorgesehen sind, welche gegenüberliegend angeordnet sein können. Es können insgesamt zwischen zwei und sechzehn Anlageflächen vorgesehen sein. Die Anlageflächen sind besonders bevorzugt zum Wälzlagermittelpunkt hin geneigt. Die Anlageflächen sind bevorzugt gegengleich zu der balligen Außenseite des Außenringes ausgeformt und ermöglichen somit eine radiale Positionierung des Wälzlagers. Als gegengleich ist dabei zu verstehen, dass die Anlageflächen in gleicher, aber spiegelbildlicher Weise und auf beiden Seiten zu der balligen Außenseite des Außenrings ausgebildet sind.

Vorzugsweise sind die Anlageflächen in Umfangsrichtung um 90° versetzt zu den ebenen Flächen angeordnet. Bevorzugt sind die Lagerschalen im Wesentlichen kreiszylindrisch ausgeformt und umgeben das Wälzlager im unbelasteten Zustand konzentrisch. Der Innendurchmesser der Lagerschalen ist besonders bevorzugt in den Bereichen außerhalb der Anlageflächen und der ebenen Flächen größer als der Außendurchmesser des Außenringes des Wälzlagers. Bevorzugt kann die Innenfläche der Lagerschalen eine polygonale, sternenförmige und besonders bevorzugt eine kleeblattförmige Kontur annehmen.

In einer vorteilhaften Ausführungsform steht der Außenring des Wälzlagers an ausschließlich vier Positionen in Anlage mit der Innenseite einer Lagerschale, insbesondere an den Anlageflächen und den ebenen Flächen.

Es kann weiterhin vorgesehen sein, dass die Lagerschalen seitliche Erhöhungen aufweisen, die die Lage des Wälzlagers in Richtung der Drehachse definieren und somit Axialkräfte aufnehmen können. Die seitlichen Erhöhungen sind bevorzugt zwei in Umfangsrichtung gegenüberliegende und bezogen auf die Drehachse nach innen ragende Flächen. Besonders bevorzugt können sich die seitlichen Erhöhungen in Umfangsrichtung über einen Winkelbereich erstrecken, der größer ist als der der ebenen Flächen.

Bevorzugt befinden sich die seitlichen Erhöhungen entlang des Umfanges zumindest teilweise in einem Bereich der ebenen Flächen. Die seitlichen Erhöhungen erstrecken sich dabei über einen Winkelbereich von 10° bis 60° sowie gegenüberliegend in einem Winkelbereich von 300° bis 350°. Besonders bevorzugt erstrecken sich die seitlichen Erhöhungen in einem Winkelbereich von 45° bis 135° und hierzu gegenüberliegend in einem Winkelbereich von 225° bis 315°.

Es ist vorteilhaft, wenn die seitlichen Erhöhungen jeweils an einer Stirnseite der Lagerschale angeordnet sind und auf ihrer Innenseite in Anlage mit jeweils einer Stirnseite des Außenringes des Wälzlagers stehen. So wird sichergestellt, dass die Kippbewegung des Lagers nicht beeinträchtigt ist.

Die Lagerschalen sind vorzugsweise identisch ausgebildet. Vorzugsweise sind die Lagerschalen aus einem Metallwerkstoff und besonders bevorzugt aus einem Kunststoff oder Gummi gefertigt.

Weiterhin ist bevorzugt vorgesehen, dass die Lagerschalen auf der Außenseite Vorsprünge als Verdrehsicherung aufweisen, die in korrespondierende Ausnehmungen des Getriebegehäuses greifen. Diese Vorsprünge definieren die Orientierung des Lagers im Gehäuse und stellen somit eine genaue Positionierung sicher.

Es kann weiterhin vorgesehen sein, dass die zweite Lageranordnung eine Vorspanneinrichtung aufweist, mittels derer die Lage der Welle in Bezug auf das Schraubrad einstellbar ist.

In einer bevorzugten Ausführungsform ist das Schraubrad ein Schneckenrad und die Welle eine Schneckenwelle.

Weiterhin ist eine elektromechanische Servolenkung umfassend einen Elektromotor mit einer Motorwelle vorgesehen, die ein zuvor beschriebenes Schraubradgetriebe aufweist, wobei die Motorwelle die Welle des Schraubradgetriebes antreibt. Vorzugsweise ist das Schraubrad auf einer Lenkwelle eines Kraftfahrzeuges drehfest angeordnet.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine räumliche Darstellung eines Schneckengetriebes einer elektromechanischen Servolenkung,
- Figur 2:: eine detaillierte Darstellung des Getriebes der Figur 1 reduziert auf einen Elektromotor und eine mit einem Schneckenrad in Eingriff stehende Schneckenwelle,
- Figur 3:: eine räumliche Ansicht des Eingriffs von Schneckenwelle und Schneckenrad,
- Figur 4:: einen Längsschnitt durch die Schneckenwelle mit erfindungsgemäßer Lageranordnung,
- Figur 5:: eine Explosionszeichnung der erfindungsgemäßen Lageranordnung, sowie
- Figur 6:: eine Seitenansicht der erfindungsgemäßen Lageranordnung.

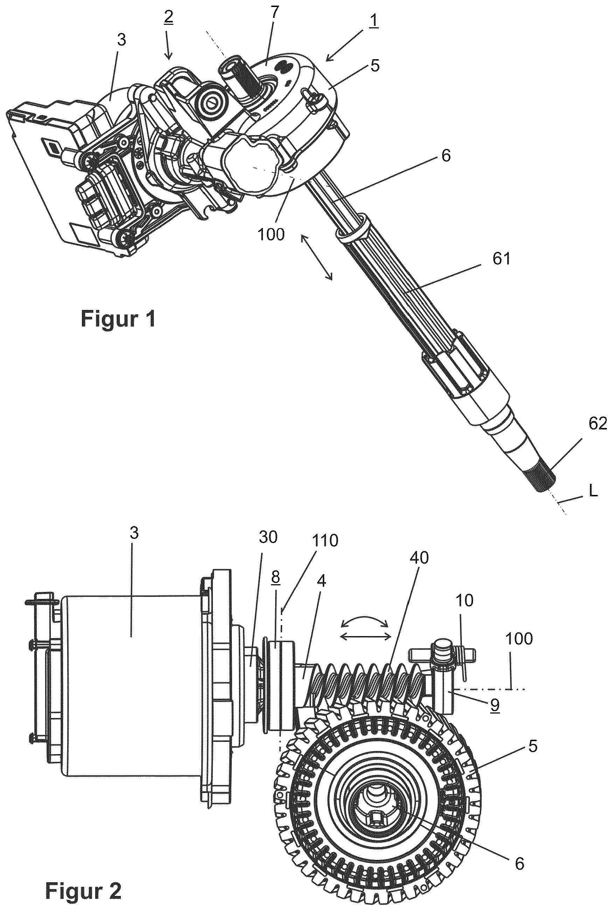

Figur 1 zeigt eine Hilfskraftlenkung 1, die an einer Lenkwelle 6 angebracht ist, welche um ihre Längsachse L, die Lenkwellenachse, drehbar gelagert ist. Die Lenkwelle 6 ist in einem hinteren Lenkwellenteil 61 drehfest, aber in Richtung der Längsachse L verstellbar, wie mit dem Doppelpfeil angedeutet, um ein an einem Befestigungsabschnitt 62 angebrachtes, hier nicht dargestelltes Lenkrad in Längsrichtung zu verstellen.

Die Hilfskraftlenkung weist ein Getriebegehäuse 7 auf, welches in der auseinander gezogenen Darstellung der Figur 2 weggelassen ist. In dem Getriebegehäuse 7 ist ein Schneckenrad 5, welches drehfest mit der Lenkwelle 6 verbunden ist, um die Längsachse L drehbar gelagert. Eine Schneckenwelle 4 steht zur Bildung eines Schneckengetriebes mit dem Schneckenrad 5 in Verzahnungseingriff.

Ein Elektromotor oder ein Servomotor 3 treibt die Schneckenwelle 4 über eine Motorwelle, die über eine Kupplung 30 bestehend aus zwei Kupplungsteilen mit der Schneckenwelle 4 drehfest gekoppelt ist, an. Die Schneckenwelle 4 steht mit ihrer Schnecke 40 in Eingriff mit einem Schneckenrad 5, das mit einem Ritzel oder, wie hier dargestellt, mit der unteren Lenkwelle 6 drehfest verbunden ist. Bei einem Betrieb des Elektromotors 3 wird die Schneckenwelle 4 angetrieben und das Schneckenrad 5 dreht sich entsprechend um eine Drehunterstützung für die untere Lenkwelle 6 bereitzustellen.

Die Figuren 2 bis 4 zeigen die Schneckenwelle 4 mit einer antriebsseitigen Lageranordnung 8 und einer antriebsfernen Lageranordnung 9 und das mit der Schneckenwelle 4 kämmende Schneckenrad 5.

Die Schneckenwelle 4 kämmt über die Schneckenverzahnung 40 mit dem Schneckenrad 5. Das Schneckenrad 5 ist wiederum drehfest mit der Lenkwelle 6 verbunden, die zwischen einem nicht dargestellten Lenkrad und dem eigentlichen Lenkgetriebe des Kraftfahrzeugs verläuft. Die genannten Bauelemente sind in dem gemeinsamen Getriebegehäuse 7 gelagert.

Die Schneckenwelle 4 ist dabei in dem Getriebegehäuse 7 mittels der antriebsseitigen Lageranordnung 8 und der antriebsfernen Lageranordnung 9 um eine Längsachse 100 drehbar gelagert. Die antriebsferne Lageranordnung 9 ist ein Wälzlager, welches als Loslager ausgebildet ist. Die Lage der Schneckenwelle 4 ist in Bezug auf das Schneckenrad 5 mittels einer Vorspanneinrichtung 10 im Bereich der antriebsfernen Lageranordnung 9 einstellbar. Die antriebsseitige Lageranordnung 8 weist ein Wälzlager 11 auf, das Schwenkbewegungen um eine senkrecht zur Längsachse 100 orientierten Schwenkachse 110 im Getriebegehäuse 7 zulässt.

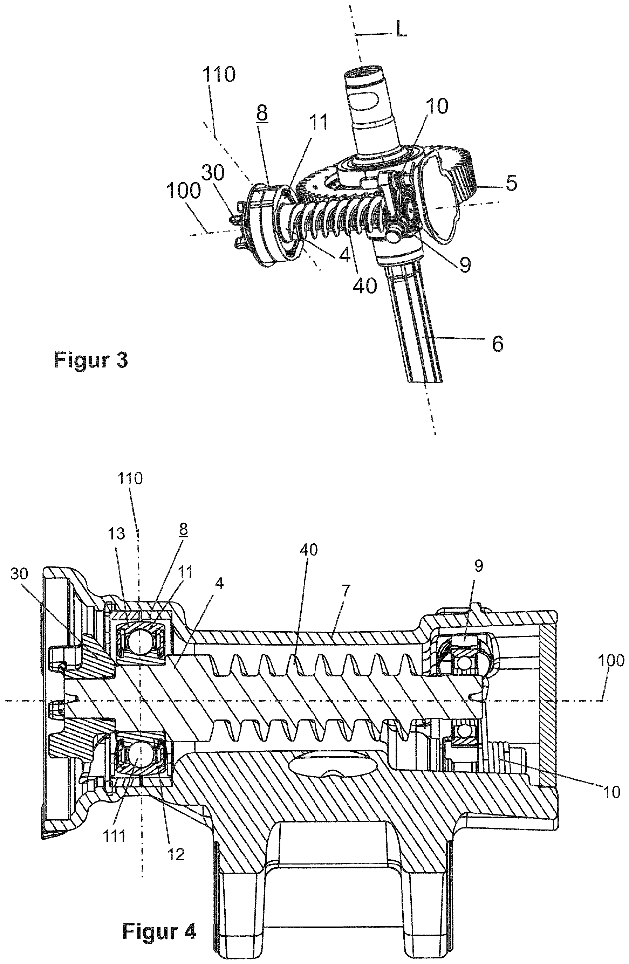

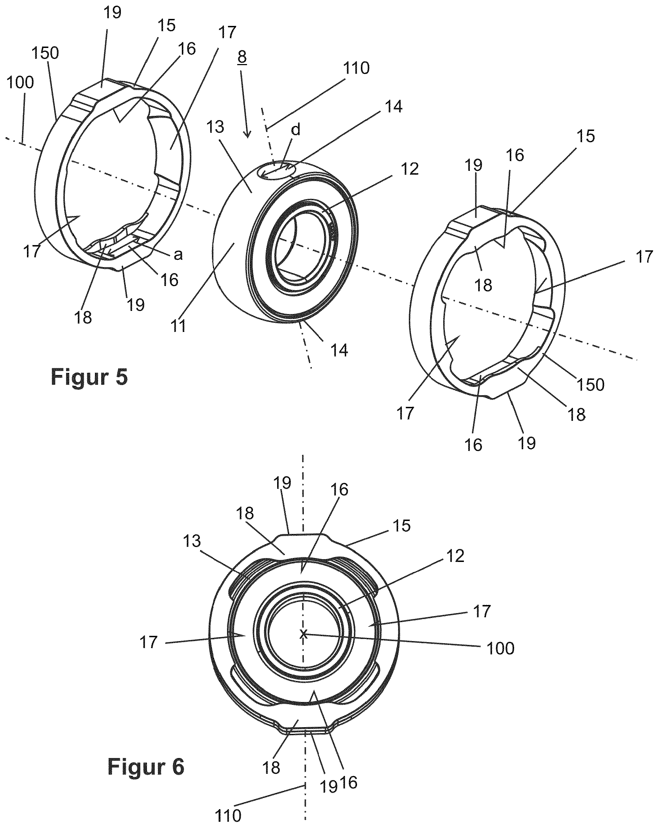

Die antriebsseitige Lageranordnung 8 ist im Detail in den Figuren 5 und 6 dargestellt. Die antriebsseitige Lageranordnung 8 weist, wie in Figur 4 dargestellt, ein Wälzlager 11 mit einem Innenring 12, Wälzkörpern 111 und einem Außenring 13 auf. Die Wälzkörper 111 laufen in Rillen zwischen dem Innenring 12 und dem Außenring 13. Der Innenring 12 weist eine innenzylindrische Mantelfläche für einen Festsitz auf der Schneckenwelle auf. Der Außenring 13 ist, wie in Figur 5 dargestellt, auf der Außenseite ballig ausgebildet und weist auf der Außenseite zwei in Umfangsrichtung des Außenringes gegenüberliegende Flachstellen 14 auf. Die beiden Flachstellen 14 sind ebene Flächen, die bevorzugt kreisförmig ausgebildet sind und deren Kreisdurchmesser kleiner ist als die Breite des Außenringes 13. Die Flachstellen 14 sind in Richtung der Längsachse 100 auf der Außenseite des Außenringes 13 mittig angeordnet und definieren die Schwenkachse 110, um die die antriebsseitige Lageranordnung 8 kippbar ist. Das Wälzlager 11 ist von zwei Lagerschalen 15 in Richtung der Längsachse 100 umschlossen, die im Wesentlichen kreiszylindrisch ausgeformt sind und das Wälzlager 11 im unbelasteten Zustand konzentrisch umgeben. Die Lagerschalen 15 sind Halbschalen, die bevorzugt identisch ausgebildet sind. Die Lagerschalen 15 weisen auf ihrer Innenseite zwei ebene Flächen 16, welche viereckförmig oder rechteckförmig ausgebildet sind. auf, die an die Flachstellen 14 des Außenringes 13 angepasst sind und an denen der Außenring 13 anliegt. Die Länge a der ebene Fläche 16 ist bezogen auf die Umfangsrichtung der Lagerschalen 15 grösser als der Durchmesser d der Flachstellen 14 des Aussenrings 13. Die Flachstellen 14 und die ebenen Innenflächen 16 sind zur Definition der Schwenkachse 110 senkrecht zu dieser ausgebildet.

Die Lagerschalen 15 liegen weiterhin an dem Außenring 13 des Wälzlagers 11 innerhalb von zwei in Umfangsrichtung begrenzten Anlageflächen 17 an. Diese Anlageflächen 17 sind um 90° versetzt zu den ebenen Flächen 16 angeordnet. Die Anlageflächen 17 liegen sich in Umfangsrichtung gegenüber. Die Anlageflächen 17 sind gegengleich zu der balligen Außenseite des Außenringes 13 ausgeformt und zum Wälzlagermittelpunkt hin geneigt. Sie erstrecken sich beispielsweise entlang des Innenumfanges über einen Winkelbereich zwischen 20° bis 60°. Die Anlageflächen 17 erlauben eine radiale Positionierung des Lagers 11 und dessen Längsachse 100.

Der Innendurchmesser der Lagerschalen 15 ist in den Bereichen außerhalb der Anlageflächen 17 und der ebenen Flächen 16 größer als der Außendurchmesser des Außenringes 13 des Wälzlagers 11. Das Lager 11 steht somit ausschließlich an den Anlageflächen 17 und den ebenen Flächen 16 in Anlage mit den Lagerschalen 15. Die Lagerschalen 15 weisen in Draufsicht von der Seite eine kleeblattförmige Ausnehmung auf, die die Innenseite bildet.

Die Lagerschalen 15 weisen zudem jeweils an einer Stirnseite 150 in den beiden Bereichen der ebenen Flächen 16 eine Erhöhung 18 auf, die sich von der Innenseite radial, in Richtung der Längsachse 100 erstreckt. Diese Erhöhungen 18 auf der Innenseite der Lagerschale bilden eine Anlage für das Lager 11 in Richtung der Längsachse 100. Im eingebauten Zustand wird das Lager 11 zwischen die seitlichen Erhöhungen 18 geklemmt und so im Inneren der Lagerschalen axial auf Höhe der Schwenkachse 110 fixiert. Durch die Klemmung werden auf das Lager 11 wirkende Axialkräfte aufgefangen. Die seitlichen Erhöhungen 18 sind so dimensioniert, dass sie ein Verschwenken der Schneckenwelle zulassen. Sie liegen daher nur an dem Außenring 13 des Lagers 11 an und der Innenring 12 ist frei. In Umfangsrichtung können sich die Erhöhungen 18 über einen Winkelbereich erstrecken, der größer ist als der der ebenen Flächen.

Um die Orientierung der Lageranordnung 8 oder der Lagerschalen 15 im Getriebegehäuse 7 sicherzustellen, weist jede Lagerschale 15 einen Vorsprung 19 auf der Außenseite auf. Der Vorsprung 19 liegt in Umfangsrichtung bevorzugt im Bereich einer der auf der Innenseite befindlichen ebenen Flächen 16. Das Getriebegehäuse 7 hat einen Sitz für die Lageranordnung 8 mit einer entsprechenden Aussparung für die Vorsprünge 19 der Lagerschalen. So wird sichergestellt, dass die Lagerschalen oder die antriebsseitige Lageranordnung 8 nur mit korrekter Orientierung im Getriebegehäuse 7 eingebaut werden kann.

Die Geometrie der Lagerschalen und des Außenringes des Wälzlagers definieren ein Schwenklager, das um die Schwenkachse mit einem geringen Drehmoment kippen kann, wodurch eine Spielfreiheit über die Lebensdauer gewährleistet ist. Die Schwenkbewegung der Schneckenwelle beträgt dabei in etwa 0.5°.

## Patentansprüche

1. Schraubradgetriebe für eine elektromechanische Servolenkung umfassend eine mit einem Schraubrad (5) kämmende Welle (4), wobei die Welle (4) in einem Getriebegehäuse (7) angeordnet ist und an ihrem ersten Ende in einer ersten Lageranordnung (8) um eine Drehachse (100) drehbar gelagert ist und an ihrem zweiten Ende in einer zweiten Lageranordnung (9) in dem Getriebegehäuse (7) gelagert ist, wobei die erste Lageranordnung (8) ein Wälzlager (11) aufweist, dessen Außenring (13) ballig ausgeformt ist, **dadurch gekennzeichnet, dass** das Wälzlager (11) von zwei Lagerschalen (15) umschlossen ist, wobei der Außenring (13) des Wälzlagers (11) auf der Außenseite zwei in Umfangsrichtung gegenüberliegende Flachstellen (14) aufweist, die eine Schwenkachse (110) ausbilden, um die die Welle (4) in Richtung des Schraubrades (5) schwenkbar ist.

2. Schraubradgetriebe nach Anspruch 1, **dadurch gekennzeichnet, dass** die Lagerschalen (15) auf einer Innenseite zwei in Umfangsrichtung gegenüberliegende ebene Flächen (16) aufweisen, die in Anlage mit den Flachstellen (14) des Außenringes (13) stehen.

3. Schraubradgetriebe nach Anspruch 1 oder 2, **dadurch gekennzeichnet, dass** der Außenring (13) des Wälzlagers (11) in zwei weiteren begrenzten Anlageflächen (17) in Anlage mit der Innenseite der Lagerschalen (15) steht.

4. Schraubradgetriebe nach Anspruch 3, **dadurch gekennzeichnet, dass** die Anlageflächen (17) gegengleich zu der balligen Außenseite des Außenringes (13) ausgeformt sind.

5. Schraubradgetriebe nach Anspruch 3 oder 4, **dadurch gekennzeichnet, dass** die Anlageflächen (17) in Umfangsrichtung um 90° versetzt zu den ebenen Flächen (16) angeordnet sind.

6. Schraubradgetriebe nach Anspruch 1 oder 2, **dadurch gekennzeichnet, dass** der Außenring (13) des Wälzlagers (11) an ausschließlich vier Positionen in Anlage mit der Innenseite einer der Lagerschalen (15) steht.

7. Schraubradgetriebe nach einem der vorhergehenden Ansprüche, **dadurch gekennzeichnet, dass** die Lagerschalen (15) seitliche Erhöhungen (18) aufweisen, die die Lage des Wälzlagers (11) in Richtung der Drehachse (100) definieren.

8. Schraubradgetriebe nach Anspruch 6, **dadurch gekennzeichnet, dass** die seitlichen Erhöhungen (18) sich entlang des Umfanges zumindest teilweise in einem Bereich der ebenen Flächen (16) befinden.

9. Schraubradgetriebe nach Anspruch 6 oder 7, **dadurch gekennzeichnet, dass** die seitlichen Erhöhungen (18) sich über einen Winkelbereich von 45° bis 135° sowie hierzu gegenüberliegend in einem Winkelbereich von 225° bis 315° erstrecken.

10. Schraubradgetriebe nach Anspruch 6 oder 7, **dadurch gekennzeichnet, dass** die seitlichen Erhöhungen (18) jeweils an einer Stirnseite der Lagerschale (15) angeordnet sind und auf ihrer Innenseite in Anlage mit jeweils einer Stirnseite des Außenringes (13) des Wälzlagers (11) stehen.

11. Schraubradgetriebe nach einem der vorhergehenden Ansprüche, **dadurch gekennzeichnet, dass** die Lagerschalen (15) identisch ausgebildet sind.

12. Schraubradgetriebe nach einem der vorhergehenden Ansprüche, **dadurch gekennzeichnet, dass** die Lagerschalen (15) auf der Außenseite Vorsprünge (19) als Verdrehsicherung aufweisen, die in korrespondierende Ausnehmungen des Getriebegehäuses (7) greifen.

13. Schraubradgetriebe nach einem der vorhergehenden Ansprüche, **dadurch gekennzeichnet, dass** die zweite Lageranordnung (9) eine Vorspanneinrichtung (10) aufweist, mittels derer die Lage der Welle (4) in Bezug auf das Schraubrad (5) einstellbar ist.

14. Schraubradgetriebe nach einem der vorhergehenden Ansprüche, **dadurch gekennzeichnet, dass** das Schraubrad (5) ein Schneckenrad und die Welle (4) eine Schneckenwelle ist.

15. Elektromechanische Servolenkung umfassend einen Elektromotor (3) mit einer Motorwelle und ein Schraubradgetriebe (1) nach einem der Ansprüche 1 bis 14, wobei die Motorwelle die Welle (4) des Schraubradgetriebes (1) antreibt.

16. Elektromechanische Servolenkung nach Anspruch 15, **dadurch gekennzeichnet, dass** das Schraubrad (5) auf einer Lenkwelle (6) eines Kraftfahrzeuges drehfest angeordnet ist.

## Claims

1. A helical gear transmission for an electromechanical servo steering mechanism, comprising a shaft (4) which meshes with a helical gear (5), wherein the shaft (4) is arranged in a transmission housing (7) and, at its first end, is mounted in a first bearing arrangement (8) so as to be rotatable about an axis of rotation (100) and, at its second end, is mounted in a second bearing arrangement (9) in the transmission housing (7), wherein the first bearing arrangement (8) has a rolling bearing (11), the outer ring (13) of which is shaped spherically, **characterized in that** the rolling bearing (11) is enclosed by two bearing shells (15), wherein the outer side of the outer ring (13) of the rolling bearing (11) has two flat points (14) which lie opposite each other in the circumferential direction and form a pivot axis (110) about which the shaft (4) is pivotable in the direction of the helical gear (5).

2. The helical gear transmission as claimed in claim 1, **characterized in that** an inner side of the bearing shells (15) has two flat surfaces (16) which lie opposite each other in the circumferential direction and are in contact with the flat points (14) of the outer ring (13).

3. The helical gear transmission as claimed in claim 1 or 2, **characterized in that** the outer ring (13) of the rolling bearing (11) is in contact with the inner side of the bearing shells (15) in two further limited contact surfaces (17).

4. The helical gear transmission as claimed in claim 3, **characterized in that** the contact surfaces (17) are shaped in a diametrically opposed manner to the spherical outer side of the outer ring (13).

5. The helical gear transmission as claimed in claim 3 or 4, **characterized in that** the contact surfaces (17) are arranged offset by 90° in the circumferential direction with respect to the flat surfaces (16).

6. The helical gear transmission as claimed in claim 1 or 2, **characterized in that** the outer ring (13) of the rolling bearing (11) is in contact with the inner side of one of the bearing shells (15) at exclusively four positions.

7. The helical gear transmission as claimed in one of the preceding claims, **characterized in that** the bearing shells (15) have lateral elevations (18) which define the position of the rolling bearing (11) in the direction of the axis of rotation (100).

8. The helical gear transmission as claimed in claim 6, **characterized in that** the lateral elevations (18) are located along the circumference at least partially in a region of the flat surfaces (16).

9. The helical gear transmission as claimed in claim 6 or 7, **characterized in that** the lateral elevations (18) extend over an angular range of 45° to 135° and, opposite thereto, in an angular range of 225° to 315°.

10. The helical gear transmission as claimed in claim 6 or 7, **characterized in that** the lateral elevations (18) are each arranged on an end side of the bearing shell (15) and, on their inner side, are in contact with in each case an end side of the outer ring (13) of the rolling bearing (11).

11. The helical gear transmission as claimed in one of the preceding claims, **characterized in that** the bearing shells (15) are formed identically.

12. The helical gear transmission as claimed in one of the preceding claims, **characterized in that** the outer side of the bearing shells (15) has projections (19) as a means for securing against rotation, said projections engaging in corresponding recesses of the transmission housing (7).

13. The helical gear transmission as claimed in one of the preceding claims, **characterized in that** the second bearing arrangement (9) has a prestressing device (10), by means of which the position of the shaft (4) is adjustable with respect to the helical gear (5).

14. The helical gear transmission as claimed in one of the preceding claims, **characterized in that** the helical gear (5) is a worm gear and the shaft (4) is a worm shaft.

15. An electromechanical servo steering mechanism, comprising an electric motor (3) with a motor shaft, and a helical gear transmission (1) as claimed in one of claims 1 to 14, wherein the motor shaft drives the shaft (4) of the helical gear transmission (1).

16. The electromechanical servo steering mechanism as claimed in claim 15, **characterized in that** the helical gear (5) is arranged for conjoint rotation on a steering shaft (6) of a motor vehicle.

## Revendications

1. Engrenage à roue hélicoïdale pour une direction assistée électromécanique, comprenant un arbre (4) engrenant avec une roue hélicoïdale (5), l'arbre (4) étant agencé dans un carter d'engrenage (7) et étant monté à sa première extrémité dans un premier agencement de palier (8) de manière à pouvoir tourner autour d'un axe de rotation (100) et étant monté à sa deuxième extrémité dans un deuxième agencement de palier (9) dans le carter d'engrenage (7), le premier agencement de palier (8) présentant un palier à roulement (11), dont la bague extérieure (13) est configurée sous forme bombée, **caractérisé en ce que** le palier à roulement (11) est entouré de deux coussinets (15), la bague extérieure (13) du palier à roulement (11) présentant sur le côté extérieur deux zones plates (14) opposées dans la direction circonférentielle, qui forment un axe de pivotement (110) autour duquel l'arbre (4) peut pivoter en direction de la roue hélicoïdale (5).

2. Engrenage à roue hélicoïdale selon la revendication 1, **caractérisé en ce que** les coussinets (15) présentent sur un côté intérieur deux surfaces planes (16) opposées dans la direction circonférentielle, qui sont en contact avec les zones plates (14) de la bague extérieure (13).

3. Engrenage à roue hélicoïdale selon la revendication 1 ou 2, **caractérisé en ce que** la bague extérieure (13) du palier à roulement (11) est en contact avec le côté intérieur des coussinets (15) dans deux autres surfaces d'appui limitées (17).

4. Engrenage à roue hélicoïdale selon la revendication 3, **caractérisé en ce que** les surfaces d'appui (17) sont formées en opposition au côté extérieur bombé de la bague extérieure (13).

5. Engrenage à roue hélicoïdale selon la revendication 3 ou 4, **caractérisé en ce que** les surfaces d'appui (17) sont agencées pour être décalées de 90° par rapport aux surfaces planes (16) dans la direction circonférentielle.

6. Engrenage à roue hélicoïdale selon la revendication 1 ou 2, **caractérisé en ce que** la bague extérieure (13) du palier à roulement (11) est en contact avec le côté intérieur de l'un des coussinets (15) en exclusivement quatre positions.

7. Engrenage à roue hélicoïdale selon l'une quelconque des revendications précédentes, **caractérisé en ce que** les coussinets (15) présentent des élévations latérales (18), qui définissent la position du palier à roulement (11) dans la direction de l'axe de rotation (100).

8. Engrenage à roue hélicoïdale selon la revendication 6, **caractérisé en ce que** les élévations latérales (18) se trouvent le long de la circonférence au moins partiellement dans une zone des surfaces planes (16).

9. Engrenage à roue hélicoïdale selon la revendication 6 ou 7, **caractérisé en ce que** les élévations latérales (18) s'étendent sur une plage angulaire de 45° à 135° ainsi que, à l'opposé, sur une plage angulaire de 225° à 315°.

10. Engrenage à roue hélicoïdale selon la revendication 6 ou 7, **caractérisé en ce que** les élévations latérales (18) sont agencées respectivement sur un côté frontal du coussinet (15) et sont en contact, sur leur côté intérieur, avec respectivement un côté frontal de la bague extérieure (13) du palier à roulement (11).

11. Engrenage à roue hélicoïdale selon l'une quelconque des revendications précédentes, **caractérisé en ce que** les coussinets (15) sont configurés sous forme identique.

12. Engrenage à roue hélicoïdale selon l'une quelconque des revendications précédentes, **caractérisé en ce que** les coussinets (15) présentent sur le côté extérieur des saillies (19) en tant que sécurité contre la rotation, qui s'engagent dans des évidements correspondants du carter d'engrenage (7).

13. Engrenage à roue hélicoïdale selon l'une quelconque des revendications précédentes, **caractérisé en ce que** le deuxième agencement de palier (9) présente un appareil de précontrainte (10), au moyen duquel la position de l'arbre (4) peut être ajustée par rapport à la roue hélicoïdale (5).

14. Engrenage à roue hélicoïdale selon l'une quelconque des revendications précédentes, **caractérisé en ce que** la roue hélicoïdale (5) est une roue à vis sans fin et l'arbre (4) est un arbre à vis sans fin.

15. Direction assistée électromécanique comprenant un moteur électrique (3) avec un arbre moteur et un engrenage à roue hélicoïdale (1) selon l'une quelconque des revendications 1 à 14, l'arbre moteur entraînant l'arbre (4) de l'engrenage à roue hélicoïdale (1).

16. Direction assistée électromécanique selon la revendication 15, **caractérisée en ce que** la roue hélicoïdale (5) est agencée de manière immobile en rotation sur un arbre de direction (6) d'un véhicule automobile.
